# EUROPEAN PATENT SPECIFICATION

(11) **EP 2 089 939 B1**
(45) Date of publication and mention of the grant of the patent: **13.08.2014**
(21) Application number: 07864924.1
(22) Date of filing: 29.11.2007
(51) Int. Cl.: H01R 13/514, H01R 13/627

(54) **LATCHING MECHANISM FOR A MODULE**
VERRIEGELUNGSMECHANISMUS FÜR EIN MODUL
MECANISME DE VERROUILLAGE POUR MODULE

(30) Priority: 30.11.2006 US 868043 P; 30.07.2007 US 830674
(43) Date of publication of application: 19.08.2009
(73) Proprietor: Finisar Corporation, Sunnyvale, CA 94089 (US)
(72) Inventor: MOORE, Joshua, Sunnyvale, CA 94089 (US)
(74) Representative: Foster, Mark Charles
(86) International application number: PCT/US2007/085972
(87) International publication number: WO 2008/067489

(56) References cited:
- US-A- 6 081 431
- US-A1- 2003 156 801
- US-A1- 2004 077 207
- US-A1- 2004 235 332
- US-A1- 2006 014 408
- US-A1- 2006 245 759
- US-B1- 6 533 603
- US-B1- 6 786 653
- US-B1- 7 056 156
- US-B2- 6 824 416

## Description

### BACKGROUND

Modules, such as electronic or optoelectronic transceiver or transponder modules, are increasingly used in electronic and optoelectronic communication. Some modules are pluggable, which permits the module to be inserted and removed from a receptacle of a host device, such as a host computer, switching hub, network router, or switch box. Some host devices include multiple receptacles and can therefore accommodate multiple modules simultaneously. Each module typically communicates with a printed circuit board of the host device by transmitting and/or receiving electrical signals to and/or from the host device printed circuit board. These electrical signals can also be transmitted by the module outside the host device as optical and/or electrical signals.

In order for a module to be pluggable, various latching mechanisms have been developed to secure modules within host device receptacles and to release modules from within host device receptacles. One such latching mechanism requires the use of a separate extraction tool to retrieve a module from a host device receptacle. Use of a separate extraction tool can be undesirable because an extraction tool can raise costs, can be misplaced, and may not be compatible with other module designs and/or mechanism designs.

Other latching mechanisms require that the leading edge of the receptacle of a host device be flexible in order to enable the corresponding module to be inserted into and/or extracted from the receptacle. These mechanisms can be undesirable because a receptacle with a flexible leading edge can sometimes allow an undesirable amount of electromagnetic radiation to be unintentionally emitted from the receptacle, which can cause electromagnetic interference in surrounding electronic devices.

US 2004/0077207 is an example of a latch mechanism for use with an opto-electronic transceiver module that allows a user to selective extract the transceiver module from a port by moving an attached bail between a first and second position. US 6,786,653 is another example of a transceiver module having a release mechanism that rotates with respect to a connector assembly when a pull tab is pulled outwardly. US 2003/0156801 is a further example of an opto-electrical transceiver module which is adapted to be retained in a metal cage. It describes an ejector for disengaging a latch from a retaining tab of the cage. US 6,081,431 describes a shielded circuit board connector module that uses an eject handle and cam bars coupled to a receptacle frame to assist in extracting the module from its connection with another circuit board.

### SUMMARY OF SOME EXAMPLE EMBODIMENTS

In general, example embodiments of the invention relate to a latching mechanism for use in selectively securing a module within a receptacle of a host device. The example latching mechanisms disclosed herein enable module insertion and removal while providing a handle capable of withstanding relatively high pull forces. The example latching mechanisms also include features that assist both the selective retention of the module within a receptacle of a host device and removal therefrom when desired. Moreover, in one example embodiment, the latching mechanism is configured so as to retract its engagement pin while a bail of the latching mechanism is still in the latched position so as to prevent malfunction as the module is inserted into a receptacle with a substantially rigid leading edge.

In one example embodiment, a latching mechanism includes a bail and a latch attached to the bail. The bail is configured to be attached to a shell of a module and to rotate about a first axis between a latched position and an unlatched position. The first axis is in a fixed position relative to the shell. The latch is attached to the bail at a second axis that is offset from the first axis. The latch is configured to rotate about the second axis. The second axis is movable relative to the shell.

In another example embodiment, a module includes a shell including a cross bar, a PCB at least partially positioned within the shell, a TOSA and a ROSA both electrically coupled to the PCB, and a latching mechanism. The latching mechanism includes a bail and a latch attached to the bail. The bail is attached to the shell and is configured to rotate about a first axis between a latched position and an unlatched position, with the first axis being in a fixed position relative to the shell. The latch is attached to the bail at a second axis that is offset from the first axis. The latch is configured to rotate about the second axis with the second axis being movable relative to the shell.

In yet another example embodiment, a module includes a shell including a cross bar, a PCB at least partially positioned within the shell, a TOSA and a ROSA both electrically coupled to the PCB, and a latching mechanism. The latching mechanism includes a bail, a latch attached to the bail, and a spring attached to the latch. The bail is attached to the shell and is configured to rotate about a first axis between a latched position and an unlatched position, with the first axis being in a fixed position relative to the shell. The latch is attached to the bail at a second axis that is offset from the first axis. The latch is configured to rotate about the second axis with the second axis being movable relative to the shell. The spring is configured to engage a corresponding surface of the shell such that a pin of the latch is biased to extend from the shell when the bail is in the latched position. The spring also configured to allow the pin to be resiliently retained within the shell when the bail is in the latched position.

These and other aspects of example embodiments of the invention will become more fully apparent from the following description and appended claims.

### BRIEF DESCRIPTION OF THE DRAWINGS

To further clarify the above and other aspects of example embodiments of the invention, a more particular description of these examples will be rendered by reference to specific embodiments thereof which are disclosed in the appended drawings. It is appreciated that these drawings depict only example embodiments of the invention and are therefore not to be considered limiting of its scope. It is also appreciated that the drawings are diagrammatic and schematic representations of example embodiments of the invention, and are not limiting of the invention nor are they necessarily drawn to scale. Example embodiments of the invention will be disclosed and explained with additional specificity and detail through the use of the accompanying drawings in which:
Figure 1A is a front perspective view of an example module including an example latching mechanism;
Figure 1B is an upside-down rear perspective view of the example module of Figure 1A;
Figure 1C is an exploded view of the example module of Figure 1A;
Figure 2A is a front exploded view of an example handle of the example latching mechanism of Figures 1A-1C;
Figure 2B is a rear exploded view of the example handle of Figure 2A;
Figure 3A is a front perspective view of an example latch of the example latching mechanism of Figures 1A-1C;
Figure 3B is an upside-down rear perspective view of the example latch of Figure 3A;
Figure 4A-4D are various views of portions of the module of Figure 1A;
Figure 5A is a cross-sectional side view of the module of Figure 1A showing the module plugged into an example host device receptacle with the latching mechanism in a latched position;
Figure 5B is a cross-sectional side view of the example module and the example host device receptacle of Figure 5A with the latching mechanism in an unlatched position;
Figure 6A is a partial perspective view of another example module including another example latching mechanism; and
Figure 6B is a cross-sectional side view of the module and the example latching mechanism of Figure 6A showing the module plugged into an example host device receptacle with the handle of the latching mechanism in a latched position and the latch of the latching mechanism in a resiliently retained position.

### DETAILED DESCRIPTION OF SOME EXAMPLE EMBODIMENTS

Example embodiments of the invention relate to a latching mechanism for use in selectively securing a module within a receptacle of a host device. The example latching mechanisms disclosed herein enable module insertion and removal while providing a handle capable of withstanding relatively high pull forces. The example latching mechanisms also include features that assist both the selective retention of the module within a receptacle of a host device and removal therefrom when desired. Moreover, in one example embodiment, the latching mechanism is configured so as to retract its engagement pin while a bail of the latching mechanism is still in the latched position so as to prevent malfunction as the module is inserted into a receptacle with a substantially rigid leading edge.

### 1. Example Module

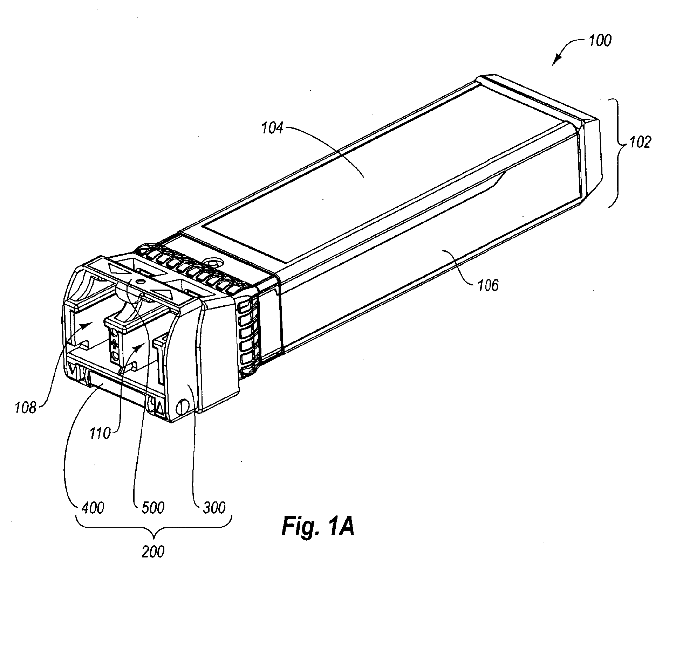

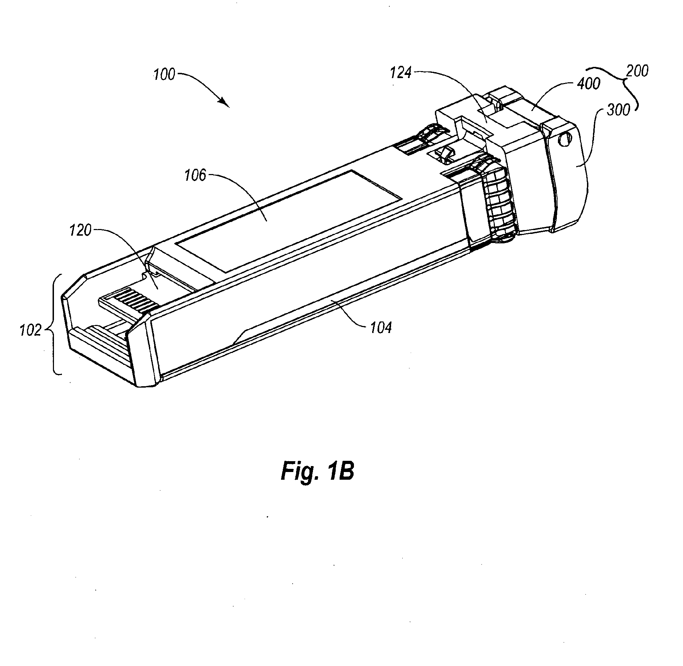

Reference is first made to Figures 1A-1C which disclose an example module 100 for use in transmitting/receiving optical signals that are converted from/to electrical signals that are transmitted to/received from a host device (not shown). As disclosed in Figures 1A and 1B, the module 100 includes various components, including a shell 102 that includes a top shell 104 and a bottom shell 106, and an output port 108 and an input port 110 defined in the bottom shell 106. The top shell 104 and the bottom shell 106 can be formed using a die casting process. One example material from which the top shell 104 and the bottom shell 106 can be die cast is zinc, although the top shell 104 and the bottom shell 106 may alternatively be die cast, injection molded, machined, or otherwise manufactured from other suitable materials.

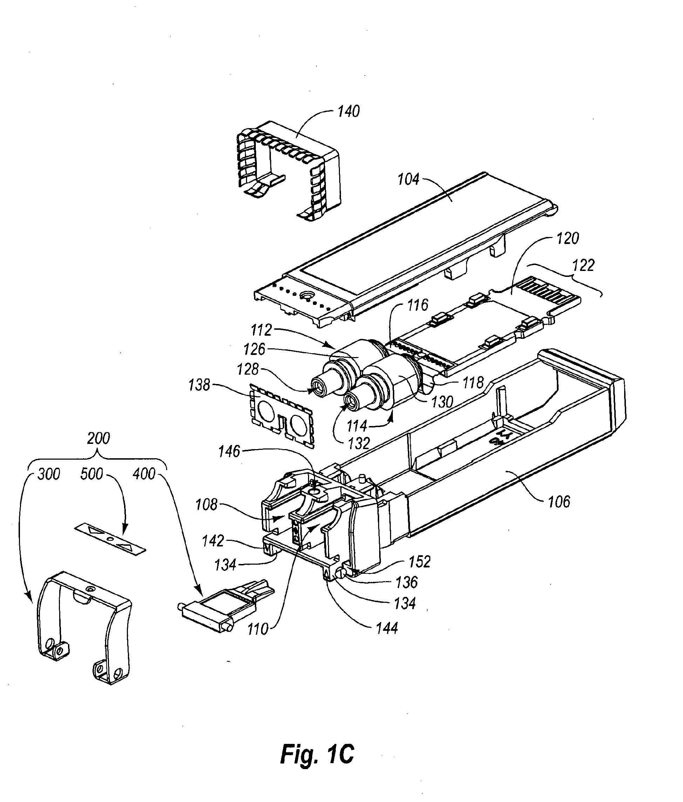

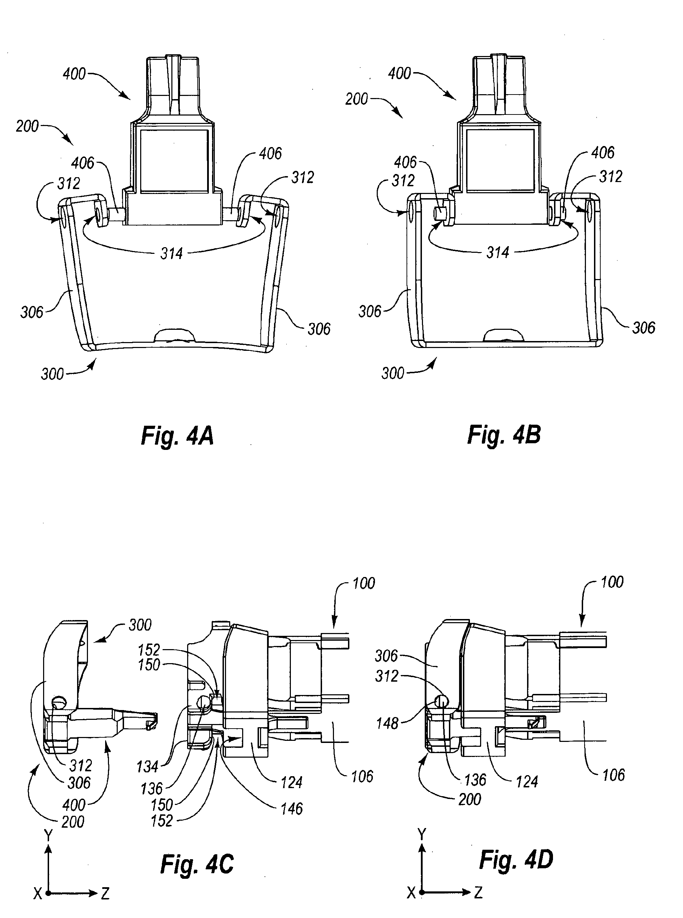

As disclosed in Figure 1B and/or 1C, the example module 100 also includes a transmitter optical subassembly ("TOSA") 112, a receiver optical subassembly ("ROSA") 114, electrical interfaces 116 and 118, and a printed circuit board ("PCB") 120 having an edge connector 122. The two electrical interfaces 116 and 118 are used to electrically connect the TOSA 112 and the ROSA 114, respectively, to the PCB 120. The bottom shell 106 also includes a cross bar 124 which will be discussed in further detail below in connection with Figures 4A-6B.

The TOSA 112 of the module 100 includes a barrel 126 within which an optical transmitter, such as a laser, (not shown) is positioned. The optical transmitter is configured to convert electrical signals received through the PCB 120 from a host device (not shown) into corresponding optical signals. The TOSA 112 also includes a port 128. The port 128 is configured to optically connect the optical transmitter positioned within the barrel 126 with a fiber-ferrule (not shown) positioned within the output port 108.

Similarly, the ROSA 114 of the module 100 includes a barrel 130 and a port 132. The port 132 is configured to optically connect an optical receiver, such as a photodiode (not shown), positioned within the barrel 130 to a fiber-ferrule (not shown) positioned within the input port 110. The optical receiver is configured to convert optical signals received from the fiber-ferrule into corresponding electrical signals for transmission to a host device (not shown) through the PCB 120.

The module 100 further includes a pair of tabs 134, a pair of posts 136, an example optical sub-assembly ("OSA") positioning plate 138, and an example collar clip 140. The tabs 134 can include data direction indicators 142 and 144 that correspond to the data directions of the TOSA 112 and the ROSA 114, respectively. Specifically, the data direction indicator 142 specifies that the TOSA 112 transmits data out of the output port 108 and the data direction indicator 144 specifies that the ROSA 114 receives data through the input port 110. The example OSA positioning plate 138 can help secure the TOSA 112 and the ROSA 114 in an accurate x, y, and z optical alignment with the output port 108 and the input port 110, respectively. In addition, the OSA positioning plate 138 can help solve problems associated with gaps that result from manufacturing tolerances of the top shell 104, the bottom shell 106, the TOSA 112, and the ROSA 114. The example collar clip 140 can secure the top shell 104 to the bottom shell 106 and thus eliminate the need for a screw or other fastener(s) to attach the top shell 104 and the bottom shell 106 together. In addition, the example collar clip 140 can simultaneously perform an EMI containment function in conjunction with a receptacle of a host device (not shown) when the module 100 is plugged into the receptacle of the host device.

The module 100 can be configured for optical signal transmission and reception at a variety of per-second data rates including, but not limited to, 1 Gbit, 2 Gbit, 2.5 Gbit, 4 Gbit, 8 Gbit, 10 Gbit, or higher. Furthermore, the module 100 can be configured for optical signal transmission and reception at various wavelengths including, but not limited to, 850 nm, 1310 nm, 1470 nm, 1490 nm, 1510 nm, 1530 nm, 1550 nm, 1570 nm, 1590 nm, or 1610 nm. Further, the module 100 can be configured to support various transmission standards including, but not limited to, Fast Ethernet, Gigabit Ethernet, 10 Gigabit Ethernet, and 1x, 2x, 4x, and 10x Fibre Channel.

In addition, although one example of the module 100 is configured to have a form factor that is substantially compliant with the SFP+ (IPF) MSA, the module 100 can alternatively be configured to have a variety of different form factors that are substantially compliant with other MSAs including, but not limited to, the SFF MSA or the SFP MSA. Also, although the example module 100 is configured as an optoelectronic transceiver module, the example latching mechanisms disclosed herein can also benefit other modules such as optoelectronic transponder modules or electronic transceiver or transponder modules.

### 2. Example Latching Mechanism

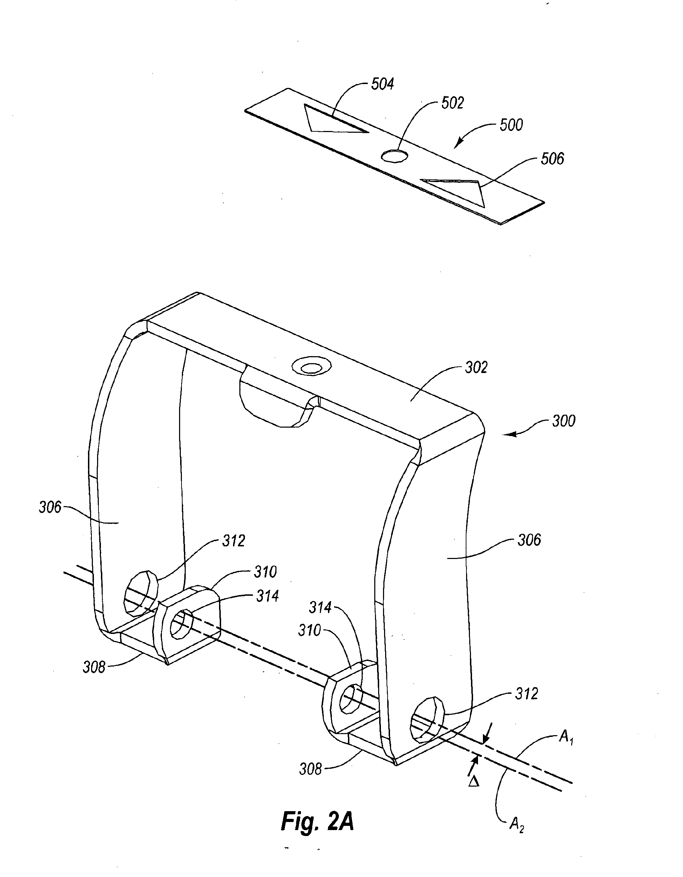

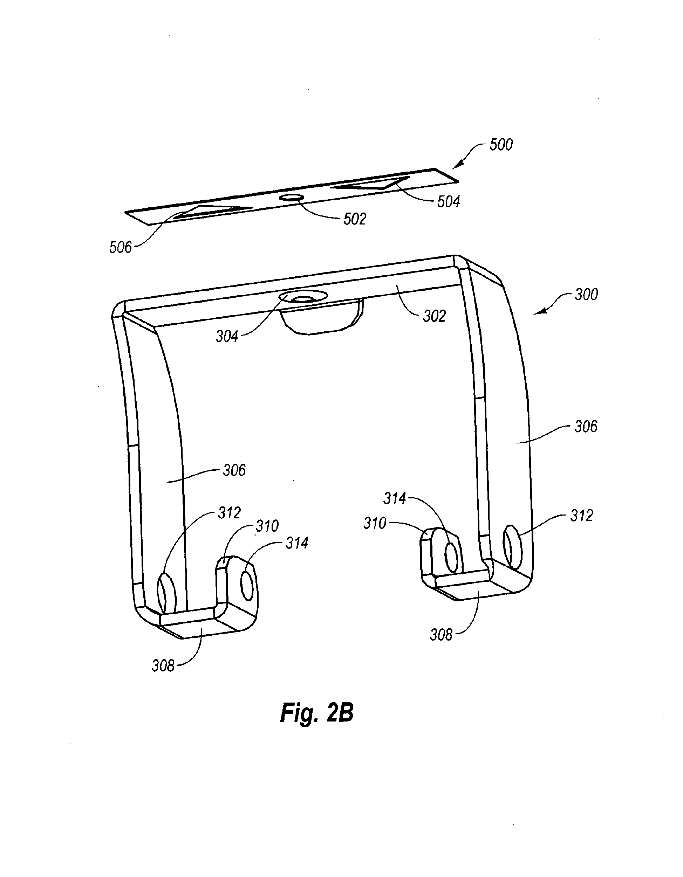

With continued reference to Figures 1A-1C, the module 100 also includes an example latching mechanism 200. The example latching mechanism 200 generally includes a bail 300 and a latch 400 configured to cooperate with each other in releasably securing the optoelectronic transceiver module 100 within a receptacle, such as a cage, of a host device (not shown). The bail 300 may also include a visible indicator that provides information concerning a characteristic of the module 100. One example of such a visible indicator is a decal 500, aspects of which will be discussed in greater detail below in connection with Figures 2A and 2B.

With continued reference to Figure 1C, and with reference now also to Figures 2A and 2B, additional aspects of the bail 300 are disclosed. In one embodiment, the bail 300 is composed of sheet metal, though other suitable materials can also be used. The bail 300 includes a handle 302 that can be grasped by a user in order to reposition the bail 300 and in order to remove the module 100 from a receptacle of a host device (not shown). The bail 300 also includes a downward-extending protrusion 304 (Figure 2B) defined in the handle 302, a pair of arms 306 connected to the handle 302, a pair of bases 308 connected to the arms 306, respectively, and a pair of fingers 310 connected to the bases 308, respectively.

Each of the arms 306 also includes a shell post hole 312, and each of the fingers 310 includes a latch post hole 314. As disclosed in Figure 2A, the two shell post holes 312 define a first axis A₁ and the latch post holes 314 define a second axis A₂. However, the two shell post holes 312 are offset with respect to the latch post holes 314. In detail, the axis A₁ defined by the two shell post holes 312 and the axis A₂ defined by the two latch post holes 314 are offset a distance Δ from each other.

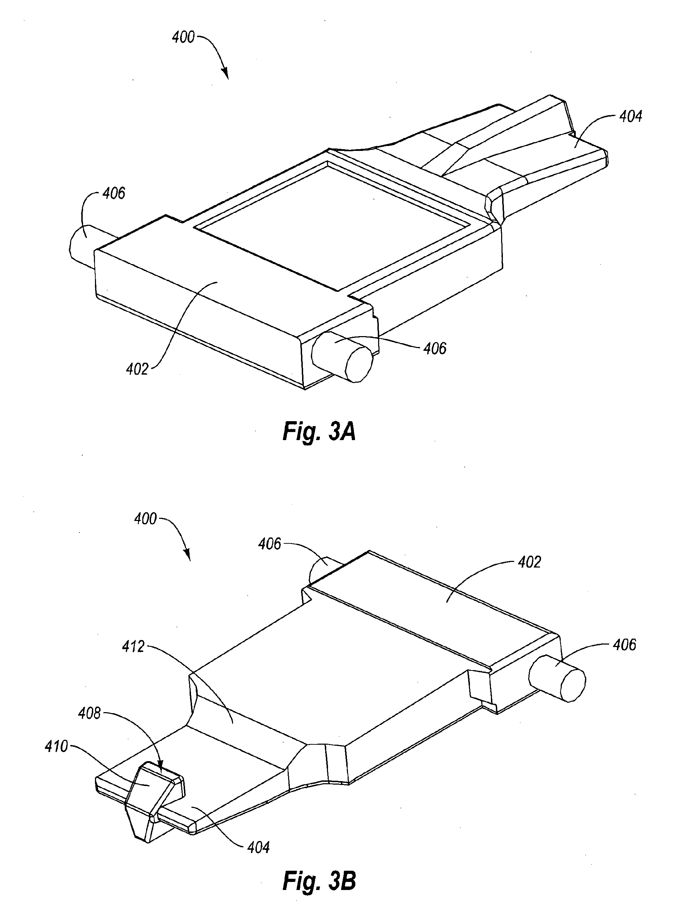

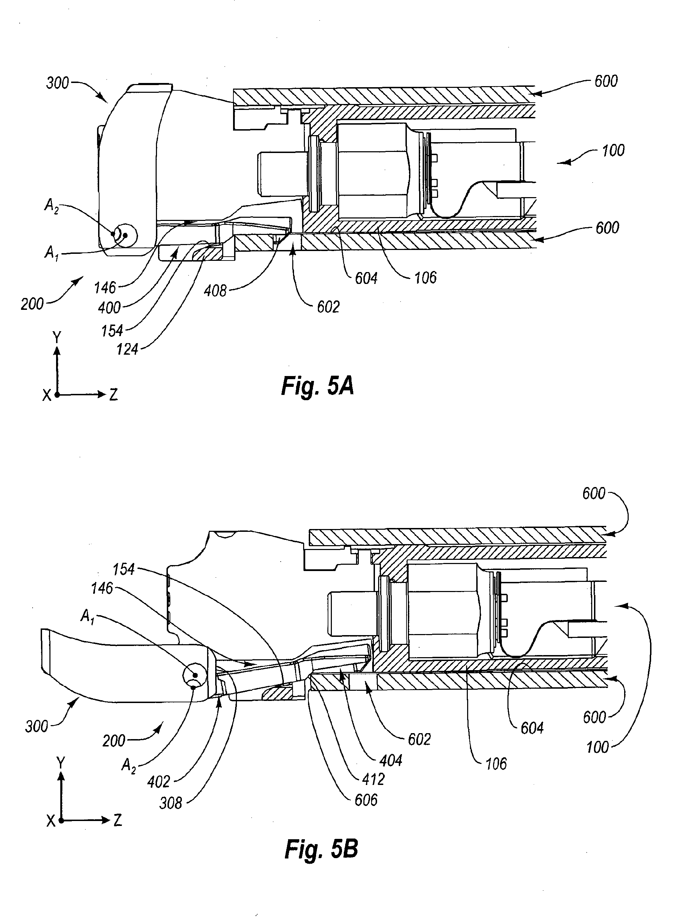

As disclosed in Figure 2B, the protrusion 304 extends downward from the underside of the handle 302 of the bail 300. As disclosed in Figure 1C, the bottom shell 106 includes a recess 146 that generally corresponds in size and location to the protrusion 304. Once the bail 300 is attached to the bottom shell 106 such that the posts 136 extend through the shell post holes 312, the bail 300 can be rotated about the axis A₁ with a travel distance of approximately 90 degrees in this example. The protrusion 302 is positioned to interfere with the bottom shell 106. However, the bail 300 is configured to flex slightly so that the interference between the protrusion 302 and the bottom shell 106 can to be overcome when the bail 300 is rotated about the axis A₁ from an unlatched position into a latched position. As used herein, the term "latched position" refers to a position of the bail 300 that results in a latch pin (see, for example, the latch pin 408 of Figure 3B) of the latch 400 extending out of the bottom shell 106 of the module 100 and engaging a corresponding structure of a host device, such as a recess defined in the floor of a host receptacle for example, as disclosed in Figure 5A. As used herein, the term "unlatched position" refers to a position of the bail 300 that results in a latch pin of the latch 400 retracted within a cavity defined in the bottom shell 106 of the module 100 such that the latch pin does not engage a corresponding structure of a host device, such as a recess defined in the floor of a host receptacle for example, as disclosed in Figure 5B.

In particular, as the bail 300 is rotated into the latched position, the protrusion 304 can releasably engage the recess 146 by seating in the recess 146, thereby releasably securing the bail 300 in the latched position. The protrusion 304 and the recess 146 can thus provide tactile feedback to a user as the protrusion 304 seats in the recess 146. This securement of the bail 300 in the latched position can avoid the inadvertent release of the bail 300 from the latched position. In addition, a user can apply a deliberate force to the bail 300 to disengage the protrusion 304 from the recess 146 in order to release of the bail 300 from the latched position.

It is noted that the size, location, number, and shape of the protrusion 304 and/or the recess 146 disclosed in Figures 1C and 2B can vary in alternative embodiments. For example, the size of the protrusion 304 and/or the recess 146 can be increased or decreased. In addition, the protrusion 304 and the recess 146 can be located anywhere along the top or sides of the bail 300 and the bottom shell 106, respectively. Further, multiple protrusion/recess pairs can be included in the bail 300 and the bottom shell 106. Also, the shape of the protrusion 304 and the recess 146 need not be substantially circular as disclosed in Figures 1C and 2A, but could instead be any other suitable shape, such as an elongated bar shape for example. Finally, the respective locations of the protrusion(s) 304 and the recess(es) 146 can be reversed, with the protrusion 304 being defined in the bottom shell 106 and the recess 146 being defined in the bail 300.

The example bail 300 may further include one or more visible indicators that provide information concerning a characteristic of the module 100. The visible indicators of the bail 300 can include, for example, color-coded portions, raised or depressed characters, printed characters, or any other visible indicator that can serve to identify characteristics of the module 100. The term "characters" as defined herein refers to letters, numbers, punctuation, any other symbol, and any combination thereof. The characteristics of the module 100 that can be identified by the visible indicators of the bail 300 can include, but are not limited to, the data rate, wavelength, communication protocol, form factor, manufacturer, or vendor of the module 100.

In one example embodiment, a single visible indicator of the bail 300 can serve to identify a single characteristic of the module 100. For example, a single color-coded portion of the bail 300 can identify a wavelength of the module 100. In another example embodiment, a single visible indicator of the bail 300 can serve to identify multiple characteristics of the module 100. For example, a single color-coded portion of the bail 300 can indicate both the wavelength as well as the form factor of the module 100. In yet another example embodiment, the bail 300 can include multiple visible indicators that each serve to identify one or more characteristics of the module 100. For example, a color-coded portion of the bail 300 can identify a wavelength of the module 100 while raised characters formed on a surface of the bail 300 can identify a data rate of the module 100.

In one example embodiment, the bail 300 can include the decal 500 adhered to the handle 302 of the bail 300. The decal 500 can be formed from, or coated with, a colored material according to the wavelength of the module 100. For example, the decal 500 can be colored as follows: 1270nm, Light purple; 1290nm, Sky blue; 1310nm, Yellow Green; 1330nm, Yellow Ocher; 1350nm, Pink; 1370nm, Beige; 1390nm, White; 1410nm, Silver; 1430nm, Black; 1450nm, Yellow Orange; 1470nm, Gray; 1490nm, Violet; 1510nm, Blue; 1530nm, Green; 1550nm, Yellow; 1570nm, Orange; 1590nm, Red; and 1610nm, Brown.

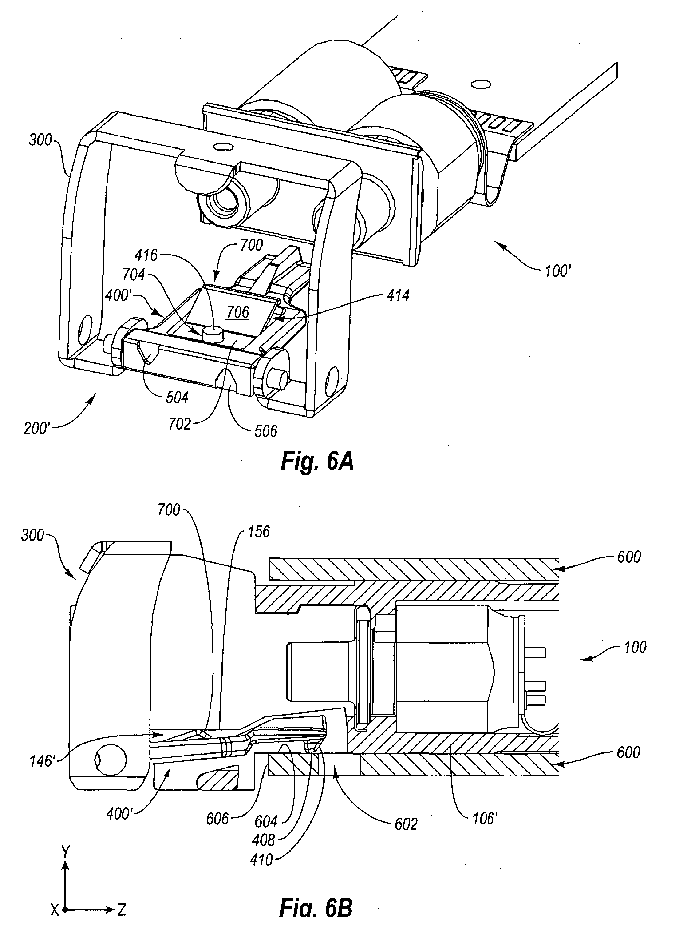

In addition, the decal 500 can include an opening 502 corresponding to the protrusion 304 of the bail 300, and data direction indicators 504 and 506 that correspond to the data directions of the TOSA 112 and the ROSA 114, respectively. Specifically, the data direction indicator 504 specifies that the TOSA 112 transmits data out of the output port 108 and the data direction indicator 506 specifies that the ROSA 114 receives data through the input port 110. In another example embodiment, the data direction indicators 504 and 506 can be included on other portions of the module 100 or the latching mechanism 200. For example, the data direction indicators 504 and 506 can be included on a visible surface of the latch 400 (see Figure 6A) or on a visible surface of the bail 300. For example, the data direction indicators 504 and 506 can be inscribed, embossed, painted, and/or anodized directly on the handle 302 of the bail 300.

With continued reference to Figures 1C, 2A, and 2B, and with reference now also to Figures 3A and 3B, details of the example latch 400 will be disclosed. The example latch 400 can be composed in one embodiment of a zinc cast material, but in other embodiments, any suitable material can be employed including, but not limited to, thermoplastics, machined aluminum, other machined materials, or sheet metal. The latch 400 includes a first end 402 and a second end 404. Two oppositely extending latch posts 406 are included on the first end 402 of the latch 400, and a latch pin 408 is included on the second end 404 of the latch 400. As discussed in further detail below, the latch pin 408 is configured to selectively engage with a corresponding structure defined in a receptacle (not shown) of a host device. As disclosed in Figure 3B, the latch pin 408 includes a wedge surface 410. When the bail 300 is positioned in the latched position, the wedge surface 410 is configured and arranged to make contact with a leading edge of a receptacle during the insertion of the module 100 into the receptacle. The latch 400 also includes a knuckle 412. When the module 100 is positioned in a receptacle of a host device, the knuckle 412 can be configured and arranged to push against a leading edge of the receptacle as the bail 300 is moved from a latched position to a unlatched position, as disclosed in greater detail below in connection with Figure 5B.

With reference now to Figures 4A-4D, and with reference as well to Figures 2A and 2B, details of an example process of assembling the latching mechanism 200 are disclosed. As disclosed in Figure 4A, the arms 306 of the bail 300 can be flexed outward to allow the latch post holes 314 of the bail 300 to be aligned with the posts 406 of the latch 400. As disclosed in Figure 4B, the arms 306 can then be released and the bail 300 can be allowed to regain its natural shape such that the posts 406 are inserted into, and maintained in, respective latch post holes 314. As disclosed in Figure 4C and 1B, the latch 400 of the latch assembly 200 can then be inserted into a cavity 146 defined by the cross-bar 124 and the bottom shell 106. So positioned, the crossbar 124 helps retain the latch 400 in the cavity 146.

As the latch 400 is inserted into the cavity 146, arms 306 of the bail 300 are configured and arranged to slide along wedge portions 148 of the posts 136. As the latch 400 is inserted into the cavity 146, sliding along the wedge portions 148 of the posts 136 causes the arms 306 of the bail 300 to be flexed outward in order for the arms 306 to slide past the posts 136 until the posts 136 are seated in respective shell post holes 312, as disclosed in Figure 4D. Also disclosed in Figure 4C are back surfaces 150 of the tabs 134 as well as notches 152, additional aspects of which will be disclosed herein in connection with Figure 5A.

Turning now to Figures 5A and 5B, aspects of the operation of the example latching mechanism 200 are disclosed. As disclosed in Figure 5A, when the bail 300 is positioned in the latched position and the module 100 is positioned within a receptacle 600 of a host device (not shown), the latch pin 408 extends out of the bottom shell 106 of the module 100 and engages a recess 602 defined in the floor 604 of the receptacle 600. In this way, the module 100 is removably secured within the receptacle 600.

As disclosed in figure 5A, the rotational axis A₁ of the bail 300 is slightly lower in the y-position than the rotational axis A₂ of the latch 400 when the bail 300 is positioned in the latched position. This arrangement ensures that if substantial force is applied to the latch pin 408 in the direction of the z-arrow in Figure 5A (hereinafter the "positive z-direction"), the latch 400 and the bail 300 will unsuccessfully attempt to rotate in a clockwise direction such that the latch pin 408 will not inadvertently unlatch from the recess 602 of the receptacle 600. In this position, the latch 400 also rests upon a surface 154 of the crossbar 124 defined by the bottom shell 106. In one example embodiment, when the bail 300 is positioned in the latched position, a small amount of pulling force exerted by the latch pin 408 in the opposite direction of the z-arrow in Figure 5A (hereinafter the "negative z-direction") against the recess 602 causes the module 100 to remain securely positioned within the receptacle 600.

As disclosed in Figure 5B, when the bail 300 is rotated about the axis A₁ to an unlatched position, this rotation causes a corresponding rotation of the latch 400 about the axis A₂. As disclosed in the cross-sectional side view of Figure 5B, however, because the axis A₁ and the axis A₂ are offset from one another, the axis A₂ moves in relation to the axis A₁ such that the axis A₂ is rotated counterclockwise to a y-position that is offset from the y-position of the axis A₁. As disclosed in Figure 5B, the axis A₁ of bail 300 and the axis A₂ of the latch 400 have substantially the same z-position when the bail 300 is positioned in the unlatched position. In addition, as the first end 402 of the latch 400 is lowered by the counterclockwise rotation of the axis A₂, the second end 404 of the latch 400 is retracted within the bottom shell 106 of the module 100. At the same time, the rotation of the bail 300 from the latched position to the unlatched position causes the latch 400 to slide backward a small distance (in the direction of the z-arrow in Figure 5A - hereinafter the "positive z-direction") along the surface 154 of the crossbar 124. The retraction of the second end 404 of the latch 400 within the bottom shell 106 causes the latch pin 408 to retract within the bottom shell 106, and thereby disengage from the recess 602 of the receptacle 600. The offset axes A₁ and A₂ therefore enable the rotational movement of the bail 300 to be converted into a translational movement of the second end 404 of the latch 400 in the positive y-direction and the positive z-direction.

The backward movement of the latch 400, together with the lowering of the first end 402 of the latch 400, causes the knuckle 412 to extend from cavity 146, as disclosed in Figure 5B. In one example embodiment, as the knuckle 412 extends from the cavity 146 proximate a leading edge 606 of the receptacle 600, the extension of the knuckle 412 assists in pushing the module 100 out of the receptacle 600, thereby facilitating removal of the module 100 from the receptacle 600.

Once disengaged in this way, the module 100 can then be pulled from the receptacle 600. In one example embodiment, when the bail 300 is positioned in the unlatched position disclosed in Figure 5B, the bail 300 is positioned such that the bases 308 of the bail 300 are positioned in respective notches 152 adjacent to the rear surfaces 150 of the shell tabs 134 (see Figures 4C and 1C). This position enables the bail 300 to pull against not only against the shell posts 136 but also against the rear surfaces 150 of the shell tabs 134. The additional structural support provided by the shell tabs 134 results in the ability of the module 100 to withstand a relatively greater pull force than where the shell tabs 134 are not present. In one embodiment, a pull force of approximately 50 pounds can be achieved. The ability to withstand a relatively greater pull force is desirable because this ability allows the module 100 to be removed from a receptacle quickly with little or no risk of damaging the handle 300 or the module 100.

Thus, the example latching mechanism 200 can be used to selectively secure the module 100 within the receptacle 600 of a host device (not shown). The example latching mechanism 200 disclosed herein enables module insertion and removal while providing a handle 300 capable of withstanding relatively high pull forces. The example latching mechanism 200 can also assist in pushing the module 100 out of the receptacle 600, thereby facilitating removal of the module 100 from the receptacle 600.

### 3. Another Example Latching Mechanism

Reference is now made to Figures 6A and 6B, which disclose various aspects regarding a module 100' that includes another example latching mechanism 200'. As disclosed in Figure 6A, the example latching mechanism 200' includes a cantilever spring 700 attached to a latch 400'. The spring 700 includes a base 702 having a hole 704. The base 702 is secured within a depression 414 formed in the latch 400' such that a post 416 of the latch 400' extends through the hole 704. Swaging of the post 416, use of an adhesive, or clipping the spring 700 in the latch 400', for example, can be used to secure the base 702 in the depression 414 in the latch 400'. Thus secured, a cantilever 706 of the spring 700 extends upward beyond the depression 414 of the latch 400'.

As disclosed in Figure 6B, the spring 700 is configured to make contact with an inside surface 156 of the cavity 146' defined in a bottom shell 106' at least when the latch pin 408 is raised up to the level of the floor 604 of the receptacle 600. The spring 700 may additionally be configured to make contact with the inside surface 156 when the latch pin 408 is engaged in the recess 602 of the receptacle 600. A spring force exerted by the spring 700 against the inside surface 156 urges the latch pin 408 of the latch 400' downward so that when the latch pin 408 moves forward into position above the recess 602 of the receptacle 600, the latch pin 408 is biased into the recess 602. However, the spring 700 does not prevent the pin 408 from retracting into the bottom shell 106' when an upward force is exerted against the latch pin 408, such as by the floor 604 of the receptacle 600. Then, when that upward force is removed, the spring 700 is automatically extended against the inside surface 156 of the bottom shell 106', such as when the module 100' is inserted to the point where the pin 408 can extend through the recess 602.

For example, as disclosed in Figure 6B, when the bail 300 is positioned in the latched position, the module 100' can subsequently be inserted into a receptacle 600 having a substantially rigid leading edge 606, since the latch pin 408 can travel upward in response to an upward force exerted by the floor 604 of the receptacle 600 on the latch pin 408. As disclosed elsewhere herein, the latch pin 408 may define a wedge surface 410. When the bail 300 is positioned in the latched position, the wedge surface 410 is configured to make contact with the substantially rigid leading edge 606 of the receptacle 600 during the insertion of the module 100' into the receptacle 600. The wedge surface 410 may enable the latch pin 408 to be smoothly pushed into the bottom shell 106'. So configured, the module 100' can be inserted into the receptacle 600 with the bail 300 in the latched position because the latch pin 408 can momentarily retract into the bottom shell 106', while initially passing into the receptacle 600, and then re-emerge from the bottom shell 106' once the latch pin 408 moves forward to the recess 602. In one example embodiment, the substantially rigid leading edge 606 of the receptacle 600 can help decrease the emission of electromagnetic radiation from within the receptacle 600, thereby decreasing the occurrence of electromagnetic interference in nearby electronic devices.

Thus, the example latching mechanism 200' can be used to selectively secure the module 100' within the receptacle 600 of a host device (not shown). In addition to the aspects discussed above in connection with the latching mechanism 200, the example latching mechanism 200' is configured so as to retract its latch pin 408 while still in the latched position so as to prevent malfunction when the module 100' is inserted into a receptacle with a substantially rigid leading edge.

## Claims

1. A latching mechanism (200) comprising:
a bail (300) configured to be attached to a shell (102, 104, 106) of a module (100), the bail (300) configured to rotate about a first axis (A₁) between a latched position and an unlatched position, the first axis (A₁) being in a fixed position relative to the shell (102, 104, 106); and
a latch (400) attached to the bail (300) at a second axis (A₂) that is offset from the first axis (A₁), the latch (400) configured to rotate about the second axis (A₂), the second axis (A₂) being movable relative to the shell (102, 104, 106), **characterized in that**
the latch (400) includes a pin (408) configured to releasably engage a corresponding structure of a host device when the bail (300) is in the latched position, the pin further being configured to disengage from the corresponding structure when the bail (300) is rotated from the latched position to the unlatched position.

2. The latching mechanism (200) as recited in claim 1, wherein the first axis (A₁) and the second axis (A₂) have substantially the same z-position when the bail (300) is positioned in the unlatched position.

3. The latching mechanism (200) as recited in claim 1, wherein the bail (300) defines a protrusion (304) configured and arranged to releasably engage a recess (146, 602) defined in the shell (102, 104, 106).

4. The latching mechanism (200) as recited in claim 1, wherein the bail (300) defines a recess (146) configured and arranged to releasably engage a protrusion 304) defined in the shell (102, 104, 106).

5. A module (100) comprising:
the shell (102, 104, 106) including a cross bar (124);
a PCB (120) at least partially positioned within the shell (102, 104, 106);
a TOSA (112) electrically coupled to the PCB(120);
a ROSA (114) electrically coupled to the PCB (120); and
a latching mechanism (200) according to claim 1.

6. The latching mechanism (200) as recited in claim 1, wherein the bail 300 can be rotated about the first axis (A₁) with a travel distance of approximately 90 degrees.

7. The module (100) as recited in claim 5, wherein the bail (300) includes a visible indicator (500) that provides information concerning a characteristic of the module (100).

8. The module (100) as recited in claim 7, wherein the visible indicator (500) comprises at least one of a color or one or more characters.

9. The module (100) as recited in claim 7, wherein the characteristic of the module (100) includes one of data rate, wavelength, communication protocol, form factor, manufacturer, vendor of the module, or data direction of a corresponding optical port of the module (100).

10. The module (100) as recited in claim 5, wherein the bail (300) defines a protrusion (304) configured to engage a corresponding recess (146) of the shell (102, 104, 106) when the bail (300) is in the latched position, such that the bail (300) is releasably secured in the latched position.

11. The module as recited in claim 5, wherein the latch (200) further includes a knuckle (412) configured to push against a leading edge (606) of a receptacle (600) of a host device when the second axis (A₂) is rotated about the first axis (A₁) as the bail (300) is rotated from the latched position to the unlatched position.

12. The module (100) as recited in claim 5, wherein the latch (200) is further configured to slide against and rotate about the cross bar (124), as the bail (300) is rotated from the latched position to the unlatched position, such that the pin (408) is retracted within the shell (102, 104, 106).

13. The module (100) as recited in claim 12, wherein a portion of the latch (200) is further configured to slide in a positive z-direction against the cross bar (124) when the bail (300) is rotated from the latched position to the unlatched position.

14. The module (100) as recited in claim 5, wherein the module (100) is substantially compliant with the SFP+ (IPF) MSA.

15. A module (100) comprising:
the shell (102, 104, 106) including a cross bar;
a PCB (120) at least partially positioned within the shell (102, 104, 106);
a TOSA (112) electrically coupled to the PCB (120);
a ROSA (114) electrically coupled to the PCB (120); and
a latching mechanism (200) according to claim 2, the latching mechanism (200) including a visible indicator (500) that provides information concerning a characteristic of the module (100), and the latching mechanism (200) further comprising:
a spring (700) attached to the latch (400'), the spring (700) configured to engage a corresponding surface (156) of the shell (102, 104, 106) such that the pin (408) of the latch (400') is biased to extend from the shell (102, 104, 106) when the bail (300) is in the latched position, the spring (700) also configured to allow the pin (408) to be resiliently retained within the shell (102, 104, 106) when the bail (300) is in the latched position and wherein,
the bail (300) defines a protrusion configured to engage a recess defined in the shell (102, 104, 106) when the bail (300) is in the latched position, such that the bail (300) is releasably secured in the latched position.

## Patentansprüche

1. Verriegelungsmechanismus (200), umfassend:
einen Bügel (300), der zur Befestigung an einem Gehäuse (102, 104, 106) eines Moduls (100) konfiguriert ist, wobei der Bügel (300) konfiguriert ist, um um eine erste Achse (A₁) zwischen einer verriegelten Position und einer entriegelten Position zu rotieren, wobei die erste Achse (A₁) relativ zu dem Gehäuse (102, 104, 106) in einer festen Position ist; und
einen Riegel (400), der an dem Bügel (300) an einer zweiten Achse (A₂) befestigt ist, die von der ersten Achse (A₁) versetzt ist, wobei der Riegel (400) konfiguriert ist, um um die zweite Achse (A₂) zu rotieren, wobei die zweite Achse (A₂) relativ zu dem Gehäuse (102, 104, 106) bewegbar ist, **dadurch gekennzeichnet, dass**
der Riegel (400) einen Bolzen (408) einschließt, der für den lösbaren Eingriff mit einer entsprechenden Struktur einer Wirtsvorrichtung konfiguriert ist, wenn sich der Bügel (300) in der verriegelten Position befindet, wobei der Bolzen ferner konfiguriert ist, um sich aus dem Eingriff mit der entsprechenden Struktur zu lösen, wenn der Bügel (300) von der verriegelten Position in die entriegelte Position rotiert wird.

2. Verriegelungsmechanismus (200) nach Anspruch 1, wobei die erste Achse (A₁) und die zweite Achse (A₂) im Wesentlichen dieselbe z-Position aufweisen, wenn der Bügel (300) in der entriegelten Position positioniert ist.

3. Verriegelungsmechanismus (200) nach Anspruch 1, wobei der Bügel (300) einen Vorsprung (304) definiert, der für einen lösbaren Eingriff mit einer Vertiefung (146, 602) konfiguriert und angeordnet ist, die in dem Gehäuse (102, 104, 106) definiert ist.

4. Verriegelungsmechanismus (200) nach Anspruch 1, wobei der Bügel (300) eine Vertiefung (146) definiert, die für einen lösbaren Eingriff mit einem Vorsprung (304) konfiguriert und angeordnet ist, der in dem Gehäuse (102, 104, 106) definiert ist.

5. Modul (100), umfassend:
das Gehäuse (102, 104, 106) einschließlich eines Drehstifts (124);
eine Leiterplatte (120), die mindestens teilweise innerhalb des Gehäuses (102, 104, 106) positioniert ist;
eine TOSA (112), die elektrisch an die Leiterplatte (120) gekoppelt ist;
eine ROSA (114), die elektrisch an die Leiterplatte (120) gekoppelt ist;
einen Verriegelungsmechanismus (200) nach Anspruch 1.

6. Verriegelungsmechanismus (200) nach Anspruch 1, wobei der Bügel (300) mit einer Bewegungsdistanz von ungefähr 90 Grad um die erste Achse (A₁) rotiert werden kann.

7. Modul (100) nach Anspruch 5, wobei der Bügel (300) eine sichtbare Anzeige (500) einschließt, die Informationen zu einem Charakteristikum des Moduls (100) bereitstellt.

8. Modul (100) nach Anspruch 7, wobei die sichtbare Anzeige (500) mindestens eines von einer Farbe oder einem oder mehreren Zeichen umfasst.

9. Modul (100) nach Anspruch 7, wobei das Charakteristikum des Moduls (100) eines von Datenrate, Wellenlänge, Kommunikationsprotokoll, Formfaktor, Hersteller, Anbieter des Moduls oder Datenrichtung eines entsprechenden optischen Ports des Moduls (100) einschließt.

10. Modul (100) nach Anspruch 5, wobei der Bügel (300) einen Vorsprung (304) definiert, der zum Eingriff mit einer entsprechenden Vertiefung (146) des Gehäuses (102, 104, 106) konfiguriert ist, wenn der Bügel (300) in der verriegelten Position ist, so dass der Bügel (300) in der verriegelten Position lösbar gesichert ist.

11. Modul nach Anspruch 5, wobei der Riegel (200) ferner ein Gelenk (412) einschließt, das konfiguriert ist, um gegen eine Vorderkante (606) einer Aufnahme (600) einer Wirtsvorrichtung zu drücken, wenn die zweite Achse (A₂) um die erste Achse (A₁) rotiert wird, während der Bügel (300) von der verriegelten Position in die entriegelte Position rotiert wird.

12. Modul (100) nach Anspruch 5, wobei der Riegel (200) ferner konfiguriert ist, um gegen den Drehstift (124) zu gleiten und um diesen zu rotieren, während der Bügel (300) von der verriegelten Position in die entriegelte Position rotiert, so dass der Bolzen (408) in das Gehäuse (102, 104, 106) zurückgezogen wird.

13. Modul (100) nach Anspruch 12, wobei ein Teil des Riegels (200) ferner konfiguriert ist, um in einer positiven z-Richtung gegen den Drehstift (124) zu gleiten, wenn der Bügel (300) von der verriegelten Position in die entriegelte Position rotiert.

14. Modul (100) nach Anspruch 5, wobei das Modul (100) mit dem SFP+ (IPF) MSA im Wesentlichen konform ist.

15. Modul (100), umfassend:
das Gehäuse (102, 104, 106) einschließlich eines Drehstifts;
eine Leiterplatte (120), die mindestens teilweise innerhalb des Gehäuses (102, 104, 106) positioniert ist;
eine TOSA (112), die elektrisch an die Leiterplatte (120) gekoppelt ist;
eine ROSA (114), die elektrisch an die Leiterplatte (120) gekoppelt ist;
einen Verriegelungsmechanismus (200) nach Anspruch 2, wobei der Verriegelungsmechanismus (200) eine sichtbare Anzeige (500) einschließt, die Informationen zu einem Charakteristikum des Moduls (100) bereitstellt, und wobei der Verriegelungsmechanismus (200) ferner umfasst:
eine Feder (700), die an der Verriegelung (400') befestigt ist, wobei die Feder (700) konfiguriert ist, um in Eingriff mit einer entsprechenden Oberfläche (156) des Gehäuses (102, 104, 106) zu kommen, so dass der Bolzen (408) der Verriegelung (400') vorgespannt ist, um sich von dem Gehäuse (102, 104, 106) zu erstrecken, wenn der Bügel (300) in der verriegelten Position ist, und die Feder (700) auch konfiguriert ist, um das elastische Halten des Bolzens (408) in dem Gehäuse (102, 104, 106) zu ermöglichen, wenn der Bügel (300) in der verriegelten Position ist, und wobei
der Bügel (300) einen Vorsprung definiert, der zum Eingriff mit einer Vertiefung konfiguriert ist, die in dem Gehäuse (102, 104, 106) definiert ist, wenn der Bügel (300) in der verriegelten Position ist, so dass der Bügel (300) in der verriegelten Position lösbar gesichert ist.

## Revendications

1. Mécanisme de verrouillage (200) comprenant :
un étrier (300) configuré pour être attaché à une coque (102, 104, 106) d'un module (100), l'étrier (300) étant configuré pour tourner autour d'un premier axe (A₁) entre une position verrouillée et une position non verrouillée, le premier axe (A₁) étant dans une position fixe par rapport à la coque (102, 104, 106) ; et
un verrou (400) attaché à l'étrier (300) au niveau d'un deuxième axe (A₂) qui est décalé par rapport au premier axe (A₁), le verrou (400) étant configuré pour tourner autour du deuxième axe (A₂), le deuxième axe (A₂) étant mobile par rapport à la coque (102, 104, 106), **caractérisé en ce que**
le verrou (400) comprend une broche (408) configurée pour s'engager de manière réversible dans une structure correspondante d'un dispositif hôte lorsque l'étrier (300) se trouve dans une position verrouillée, la broche étant en outre configurée pour se dégager de la structure correspondante lorsque l'étrier (300) tourne de la position verrouillée à la position déverrouillée.

2. Mécanisme de verrouillage (200) selon la revendication 1, dans lequel le premier axe (A₁) et le deuxième axe (A₂) ont sensiblement la même position selon l'axe des z lorsque l'étrier (300) est positionné dans la position déverrouillée.

3. Mécanisme de verrouillage (200) selon la revendication 1, dans lequel l'étrier (300) définit une saillie (304) configurée et disposée pour pénétrer de manière réversible dans un évidement (146, 602) défini dans la coque (102, 104, 106).

4. Mécanisme de verrouillage (200) selon la revendication 1, dans lequel l'étrier (300) définit un évidement (146) configuré et disposé pour pénétrer de manière réversible dans une saillie (304) définie dans la coque (102, 104, 106).

5. Module (100) comprenant:
la coque (102, 104, 106) comprenant une barre transversale (124) ;
une PCB (120) positionnée en moins en partie dans la coque (102, 104, 106) ;
un TOSA (112) couplé électriquement à la PCB (120) ;
un ROSA (114) couplé électriquement à la PCB (120) ; et
un mécanisme de verrouillage (200) selon la revendication 1.

6. Mécanisme de verrouillage (200) selon la revendication 1, dans lequel l'étrier 300 peut tourner autour du premier axe (A₁) avec une distance de parcours d'environ 90°.

7. Module (100) selon la revendication 5, dans lequel l'étrier (300) comprend un indicateur visible (500) qui donne des informations concernant une caractéristique du module (100).

8. Module (100) selon la revendication 7 dans lequel l'indicateur visible (500) comprend au moins soit une couleur soit au moins un caractère.

9. Module (100) selon la revendication 7, dans lequel la caractéristique du module (100) comprend soit un débit de données, soit une longueur d'onde, soit un protocole de télécommunication, soit un facteur de forme, soit un fabricant, soit un vendeur du module, soit une direction de données d'un port optique correspondant du module (100).

10. Module (100) selon la revendication 5, dans lequel l'étrier (300) définit une saillie (304) configurée pour pénétrer dans un évidement correspondant (146) de la coque (102, 104, 106) lorsque l'étrier (300) se trouve en position verrouillée, de sorte que l'étrier (300) est fixé de manière réversible dans la position verrouillée.

11. Module selon la revendication 5, dans lequel le verrou (200) comprend en outre une articulation (412) configurée pour pousser contre un bord d'attaque (606) d'un réceptacle (600) d'un dispositif hôte lorsque le deuxième axe (A₂) tourne autour du premier axe (A₁) alors que l'étrier (300) tourne de la position verrouillée à la position déverrouillée.

12. Module (100) selon la revendication 5, dans lequel le verrou (200) est en outre configuré pour glisser contre la barre transversale (124) et autour de celle-ci, alors que l'étrier (300) tourne de la position verrouillée à la position déverrouillée, de sorte que la broche (408) est rétractée dans la coque (102, 104, 106).

13. Module (100) selon la revendication 12, dans lequel une partie du verrou (200) est en outre configurée pour glisser dans une direction positive de l'axe des z contre la barre transversale (124) lorsque l'étrier (300) tourne de la position verrouillée à la position déverrouillée.

14. Module (100) selon la revendication 5, le module (100) étant sensiblement conforme à la SFP+ (IPF) MSA.

15. Module (100) comprenant:
la coque (102, 104, 106) comprenant une barre transversale ;
une PCB (120) au moins en partie positionnée dans la coque (102, 104, 106) ;
un TOSA (112) couplé électriquement à la PCB (120) ;
un ROSA (114) couplé électriquement à la PCB (120) ; et
un mécanisme de verrouillage (200) selon la revendication 2, le mécanisme de verrouillage (200) comprenant un indicateur visible (500) qui fournit des informations concernant une caractéristique du module (100), et le mécanisme de verrouillage (200) comprenant en outre :
un ressort (700) attaché au verrou (400'), le ressort (700) étant configuré pour entrer en contact avec une surface correspondante (156) de la coque (102, 104, 106), de sorte que la broche (408) du verrou (400') est orientée pour s'étendre à partir de la coque (102, 104, 106) lorsque l'étrier (300) se trouve en position verrouillée, le ressort (700) étant aussi configuré pour permettre à la broche (408) d'être retenue avec résilience dans la coque (102, 104, 106) lorsque l'étrier (300) se trouve dans la position verrouillée et où
l'étrier (300) définit une saillie configurée pour pénétrer dans un évidement défini dans la coque (102, 104, 106) lorsque l'étrier (300) se trouve dans la position verrouillée, de sorte que l'étrier (300) est attaché de manière réversible dans la position verrouillée.
